# EUROPEAN PATENT APPLICATION

(11) **EP 2 444 427 A1**
(43) Date of publication of application: **25.04.2012**
(21) Application number: 10789386.9
(22) Date of filing: 07.06.2010
(51) Int. Cl.: C08F 2/38, C08F 36/18, C09J 111/00

(54) **POLYCHLOROPRENE, PROCESS FOR PRODUCTION OF SAME, AND ADHESIVES CONTAINING SAME**

(30) Priority: 16.06.2009 JP 2009143252
(71) Applicant: Denki Kagaku Kogyo Kabushiki Kaisha, Tokyo 103-8338 (JP)
(72) Inventor: TAMAI, Hiroshi, Itoigawa-city Niigata 949-0393 (JP); OTSU, Toshiaki, Itoigawa-city Niigata 949-0393 (JP); MORI, Hideharu, Yonezawa-city Yamagata 992-8510 (JP)
(74) Representative: Blumberg vel Spalve, Jutta
(86) International application number: PCT/JP2010/059591
(87) International publication number: WO 2010/147011

(57) **Abstract**

Provided is a polychloroprene having narrower molecular weight distribution, a method of producing the same and an adhesive containing the same.

Chloroprene alone or a mixture of chloroprene and a monomer copolymerizable with chloroprene is radically polymerized in the presence of a dithiocarbamic ester compound represented by the following Chemical Formula (A).

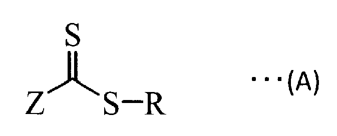

## Description

### Technical Field

The present invention relates to a polychloroprene, its production method and an adhesive containing the polychloroprene.

### Background Art

Most of polychloroprenes used as a boot, belt, hose or anti-vibration rubber for automobiles have been prepared by radical emulsion polymerization. The molecular weight of the polychloroprenes has been regulated by modification of the amount of the chain-transfer agent used therein, such as mercaptan or xanthogen disulfide or by cleavage of the polysulfide bonds in the chloroprene polymer obtained by polymerization in the presence of sulfur.

On the other hand, there is recently increasing interest in use of a dithiocarboxylic, dithiocarbamic or xanthic ester as a regulator of radical polymerization, because of its high efficiency of controlling the polymer primary structure (see, for example, Patent Documents 1 to 5).

### Citation List

### Patent Documents

[Patent Document 1] International Patent Application Publication No. WO 98/01478
[Patent Document 2] International Patent Application Publication No. WO 98/58974
[Patent Document 3] International Patent Application Publication No. WO 99/31144
[Patent Document 4] Japanese Unexamined Patent Application Publication No. 2004-115517
[Patent Document 5] Japanese Unexamined Patent Application Publication No. 2006-143899

### Summary of Invention

### Technical Problem

However, it was difficult, by the method of regulating molecular weight by modification of the amount of the chain-transfer agent or cleavage of the polysulfide bonds, to control the ratio of the weight-average molecular weight Mw to the number-average molecular weight Mn (i.e., molecular weight distribution: Mw/Mn) to less than 2.0, because the method has a limitation in controlling the polymer primary structure. In addition, there was also significant restriction on improvement of physical properties by copolymerization, because the chloroprene monomer is highly reactive radically and thus less copolymerizable with other monomers.

Further, although the methods of producing polychloroprene described in Patent Documents 1 to 5, which use a dithiocarboxylic, dithiocarbamic or xanthic ester as a regulator of radical polymerization, can make the molecular weight distribution (Mw/Mn) smaller, they had problems of gelation of the polymer which results in insolubilization in an organic solvent like toluene and deposition of the precipitated polymer on the internal wall and agitation blades in the polymerization reactor used, depending on the polymerization processing condition.

Thus, a main object of the present invention is to provide a polychloroprene having narrower molecular weight distribution, a production method thereof, and an adhesive containing the same.

### Solution to Problem

The polychloroprene according to the present invention is prepared by radical polymerization of chloroprene alone or a mixture of chloroprene and a monomer copolymerizable with chloroprene in the presence of a dithiocarbamic ester compound represented by the following Chemical Formula (1):

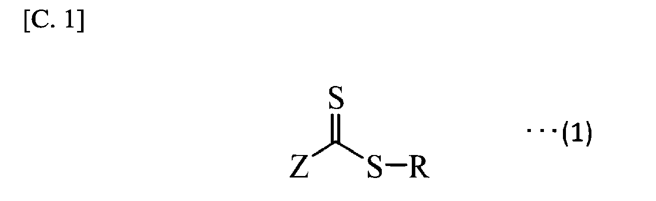

In Chemical Formula (1), Z is a substituted or unsubstituted heterocyclic group having at least one nitrogen atom that is bound to the -CS₂-R group in Chemical Formula (1) or a group represented by the following Chemical Formula (2), and R is a group represented by the following Chemical Formula (3);

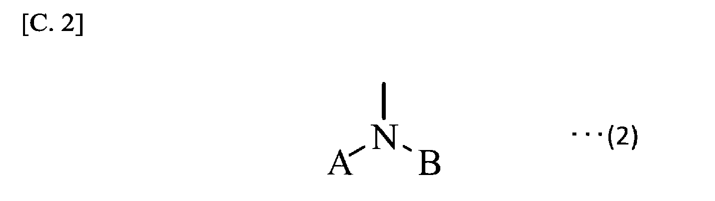

In Chemical Formula (2), A and B each independently represent a group selected from the group consisting of hydrogen, substituted or unsubstituted alkyl groups, substituted or unsubstituted alkenyl groups, substituted or unsubstituted alkoxy groups, substituted or unsubstituted acyl groups, substituted or unsubstituted aroyl groups, substituted or unsubstituted aryl groups, substituted or unsubstituted heteroaryl groups, substituted or unsubstituted alkylsulfonyl groups, substituted or unsubstituted alkylsulfinyl groups, substituted or unsubstituted alkylphosphonyl groups, substituted or unsubstituted arylsulfinyl groups and substituted or unsubstituted arylphosphonyl groups;

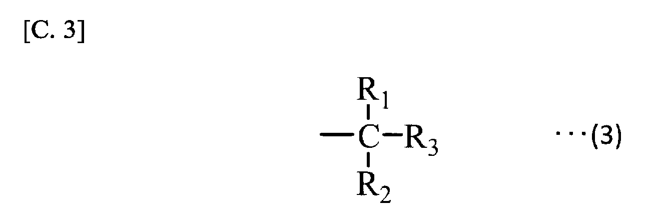

In Chemical Formula (3), R₁ represents hydrogen or an alkyl group; R₂ represents hydrogen or an alkyl, phenyl, substituted phenyl cyano or ester group; and R₃ represents a phenyl, substituted phenyl, cyano or ester group.

The monomer copolymerizable with chloroprene in the polychloroprene is, for example, at least one compound selected from the group consisting of 2,3-dichloro-1,3-butadiene, 1,3-butadiene, styrene, (meth)acrylic acid, (meth)acrylic esters and isoprene. The radical polymerization is, for example, suspension polymerization or emulsion polymerization. Further, the emulsion polymerization above may be carried out by using an anionic or nonionic emulsifier.

The polychloroprene according to the present invention is produced by radical polymerization of chloroprene alone, or a mixture of chloroprene and a monomer copolymerizable with chloroprene in the presence of a dithiocarbamic ester compound represented by Chemical Formula (1).
In the production method for polychloroprene, chloroprene may be copolymerized with at least one monomer selected from the group consisting of 2,3-dichloro-1,3-butadiene, 1,3-butadiene, styrene, (meth)acrylic acid, (meth)acrylic esters and isoprene.
In addition, the polymerization may be suspension polymerization or emulsion polymerization.
Further, in the case of emulsion polymerization, an anionic or nonionic emulsifier may be used.
Further, the pH of the mixture during polymerization may be adjusted to 4.0 to 11.0 by addition of a pH adjuster.

The adhesive according to the present invention contains the polychloroprene described above.

### Advantageous Effects of Invention

According to the present invention, a polychloroprene having narrow molecular weight distribution is obtained, because chloroprene is radically polymerized in the presence of a dithiocarbamic ester compound having a particular structure.

### Description of Embodiments

Hereinafter, embodiments of the invention will be described in detail. However, the present invention is not limited to the embodiments described below.

The polychloroprene in the embodiments of the present invention is a chloroprene homopolymer or a copolymer of chloroprene and a monomer copolymerizable with chloroprene. Specifically, it is obtained by radical polymerization of chloroprene monomer alone or a mixture of chloroprene monomer and a monomer copolymerizable with chloroprene in the presence of a dithiocarbamic ester compound represented by the following Chemical Formula (4):

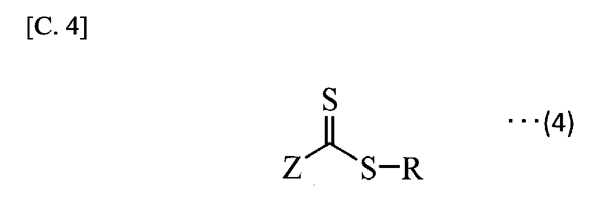

In Chemical Formula (4), Z is a substituted or unsubstituted heterocyclic group having at least one nitrogen atom that is bound to the CS₂-R group in Chemical Formula (4) or a group represented by the following Chemical Formula (5). R in Chemical Formula (4) is a group represented by the following Chemical Formula (6):

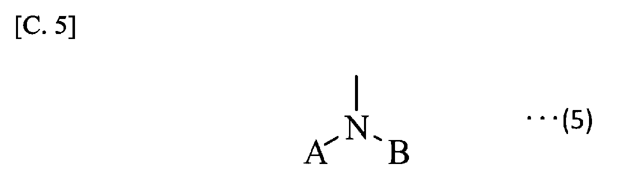

In Chemical Formula (5), A and B each independently represent a group selected from the group consisting of hydrogen, substituted or unsubstituted alkyl groups, substituted or unsubstituted alkenyl groups, substituted or unsubstituted alkoxy groups, substituted or unsubstituted acyl groups, substituted or unsubstituted aroyl groups, substituted or unsubstituted aryl groups, substituted or unsubstituted heteroaryl groups, substituted or unsubstituted alkylsulfonyl groups, substituted or unsubstituted alkylsulfinyl groups, substituted or unsubstituted alkylphosphonyl groups, substituted or unsubstituted arylsulfinyl groups and substituted or unsubstituted arylphosphonyl groups;

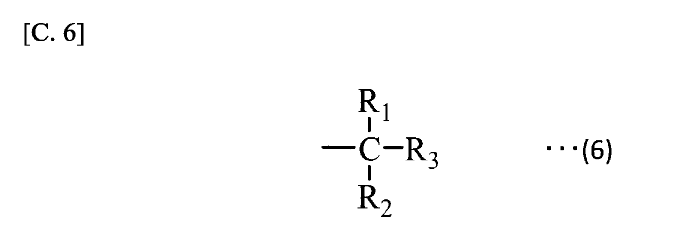

In Chemical Formula (6), R₁ represents hydrogen or an alkyl group; R₂ represents hydrogen or an alkyl, phenyl, substituted phenyl, cyano or ester group; and R₃ represents a phenyl, substituted phenyl, cyano or ester group.

### [Dithiocarbamic Ester Compound]

The dithiocarbamic ester compound is added to make the polychloroprene obtained have a molecular weight distribution adjusted in a narrow range. In the case of the polychloroprene in the present embodiment, use of a dithiocarbamic ester compound in which Z of Chemical Formula (4) is pyrrole, indole, carbazole or imidazole is preferable, if the influence on raw material cost and polymerization regulation efficiency is considered. It is possible in this way to improve the polymerization regulation efficiency without increase of the production cost.

On the other hand, R in Chemical Formula (4) is a group represented by Chemical Formula (6), which gives a relatively stable radical species, and it is particularly preferably a benzyl, 1-phenylethyl, cumyl, 1,1-diphenylmethyl, 1-cyano-1-methylmethyl, 1-cyano-1-methylethyl, 1-methoxycarbonyl-1-methylmethyl, 1-ethoxycarbonyl-1-methylmethyl, 1-methoxycarbonyl-1-methylethyl, 1-ethoxycarbonyl-1-methylethyl, 1,1-dimethoxycarbonylmethyl or 1,1-diethoxycarbonylmethyl group. It is thus possible to improve the polymerization regulation efficiency in production of chloroprene.

Examples of the dithiocarbamic ester compounds include benzyl dithiobenzoate, cumyl dithiobenzoate, benzyl pyrrolecarbodithioate, 1-phenylethyl pyrrolecarbodithioate, cumyl pyrrolecarbodithioate, 1,1-diphenylmethyl pyrrolecarbodithioate, 1-methoxycarbonyl-1-methylmethyl pyrrolecarbodithioate, 1-methoxycarbonyl-1-methylethyl pyrrolecarbodithioate, benzyl imidazolecarbodithioate, 1-phenylethyl imidazolecarbodithioate, cumyl imidazolecarbodithioate, 1,1-diphenylmethyl imidazolecarbodithioate, 1-methoxycarbonyl-1-methylmethyl imidazolecarbodithioate, 1-methoxycarbonyl-1-methylethyl imidazolecarbodithioate and the like.

Among the compounds above, preference is particularly given to benzyl pyrrolecarbodithioate, 1-phenylethyl pyrrolecarbodithioate, 1-methoxycarbonyl-1-methylethyl pyrrolecarbodithioate, benzyl imidazolecarbodithioate, 1-phenylethyl imidazolecarbodithioate and 1-methoxycarbonyl-1-methylethyl imidazolecarbodithioate, and it is possible with this regulator to narrow the molecular weight distribution of the polychloroprene obtained.

The addition amount of the dithiocarbamic ester compound is not particularly limited, but preferably 0.005 to 5.00 parts by mass, more preferably 0.05 to 1.00 parts by mass, with respect to 100 parts by mass of the total weight of the monomers to be polymerized.

### [Monomer]

Chloroprene is 2-chloro-1,3-butadiene. Examples of the monomers copolymerizable with chloroprene include 1,3-butadienes such as 2,3-dichloro-1,3-butadiene, 2-cyano-1,3-butadiene and 1-chloro-1,3-butadiene; styrenes such as styrene, α-methylstyrene, p-chloromethylstyrene, p-cyanostyrene, p-acetoxystyrene, p-styrenesulfonyl chloride, ethyl p-styrenesulfonate, p-butoxystyrene, 4-vinylbenzoic acid and 3-isopropenyl-α,α'-dimethylbenzyl isocyanate; methacrylic esters such as methyl methacrylate, glycidyl methacrylate, 2-hydroxyethyl methacrylate, 2-hydroxypropyl methacrylate, 4-hydroxybutyl methacrylate, 2-(dimethylamino)ethyl methacrylate, 2-(diethylamino)ethyl methacrylate, 3-(dimethylamino)propyl methacrylate, 2-(isocyanate)ethyl methacrylate, 2,4,6-tribromophenyl methacrylate, 2,2,3,3-tetrafluoropropyl methacrylate, 2,2,2-trifluoroethyl methacrylate, 2,2,3,3,3-pentafluoropropyl methacrylate, 2,2,3,4,4,4-hexafluorobutyl methacrylate; acrylic esters such as butyl acrylate, ethyl acrylate, 2-ethylhexyl acrylate, 2-ethoxyethyl acrylate, 2-butoxyethyl acrylate, cyclohexyl acrylate, 3-(trimethoxysilyl)propyl acrylate, 2,2,3,3-tetrafluoropropyl acrylate, 2,2,2-trifluoroethyl acrylate, 2,2,3,3,3-pentafluoropropyl acrylate and 2,2,3,4,4,4-hexafluorobutyl acrylate; acrylonitrile, methacrylonitrile, α-cyanoethyl acrylate, maleic anhydride, methacrylic acid, acrylic acid, acrolein, diacetone acrylamide, vinylmethylketone, vinylethylketone, diacetone methacrylate, isoprene and the like, and these compounds may be used alone or in combination of two or more.

Among these monomers, particularly preferable from the point of radical copolymerization efficiency with chloroprene are 2,3-dichloro-1,3-butadiene, 2-cyano-1,3-butadiene, 1-chloro-1,3-butadiene, styrene, methyl methacrylate, methacrylic acid, glycidyl methacrylate, 2-hydroxyethyl methacrylate, 2-hydroxypropyl methacrylate, 4-hydroxybutyl methacrylate, α-cyanoethyl acrylate and isoprene.

Hereinafter, the method of producing polychloroprene in the present embodiment will be described. The polychloroprene in the present embodiment is prepared by radical polymerization of the monomers described above in the presence of a dithiocarbamic ester compound.

### [Radical Polymerization]

Radical polymerization is a method of polymerizing monomers by radical mechanism, i.e., by generating radicals in a polymerization system for example by means of a radical initiator, heat or radiation ray. Generally, monomers and a molecular weight regulator such as a chain-transfer agent are dissolved, dispersed or emulsified in a medium such as an organic solvent or water; a radical initiator such as a peroxide or azo compound is added thereto; and the mixture is polymerized at a temperature from normal temperature or less to about 100°C according to the polymerizability of the monomers for several hours to several tens of hours.

Radical initiators that can be used in the method of producing a polychloroprene in the present embodiment include, for example, peroxide compounds such as benzoyl peroxide, lauroyl peroxide, t-butyl hydroperoxide, paramenthane hydroperoxide, dicumyl peroxide, potassium persulfate and ammonium persulfate; and azo compounds such as 2,2'-azobis(4-methoxy-2,4-dimethylvaleronitrile), 2,2'-azobis(2,4-dimethylvaleronitrile), 2,2'-azobis(2-methylpropionitrile), 2,2'-azobis(2-methylbutylonitrile), 1,1'-azobis(cyclohexane-1-carbonitrile), 1-[(1-cyano-1-methylethyl)azo]formamide, dimethyl 2,2'-azobis(2-methylpropionate), 4,4'-azobis(4-cyanovaleric acid), 2,2'-azobis(2,4,4-trimethylpentane), 2,2'-azobis{2-methyl-N-[1,1'-bis(hydroxymethyl)-2-hydroxyethyl]propionami de}, 2,2'-azobis{2-(2-imidazolin-2-yl)propane} dihydrochloride, 2,2'-azobis{2-(2-imidazolin-2-yl)propane} disulfate dihydrate, 2,2'-azobis{2-[1-(2-hydroxyethyl)-2-imidazolin-2-yl)propane]}dihydrochloride, 2,2'-azobis(1-imino-1-pyrrolidino-2-methylpropane) dihydrochloride, 2,2'-azobis(2-methylpropionamidine) dihydrochloride and 2,2'-azobis[N-(2-carboxyethyl)-2-methylpropionamidine] tetrahydrate.

The amount of the radical initiator used is preferably smaller than the mole number of the dithiocarbamic ester compound introduced to the polymerization system. It is possible in this way to obtain a polymer having narrower molecular weight distribution.

The radical polymerization is desirably carried out in water medium. Examples of the polymerization methods carried out in water medium include emulsion polymerization of emulsifying monomers and a molecular weight regulator in water by using a suitable emulsifier and polymerizing the monomers in the emulsifier micelles by addition of a radical initiator, mini-emulsion polymerization of dispersing monomers, a molecular weight regulator and a radical initiator in water by using a small amount of an emulsifier or dispersant and polymerizing the monomers in the monomer droplets, and suspension polymerization.

The emulsifier and dispersant used then is preferably an anionic emulsifier having a hydrophilic region that becomes an anion when dissociated in water or an nonionic emulsifier having a hydrophilic region that is not electrolytic. The addition amount of the emulsifier or dispersant is preferably 0.1 to 30 parts by mass with respect to 100 parts by mass of chloroprene.

Examples of the anionic emulsifiers for use include rosin acid salts, fatty acid salts, alkylsulfuric acid salts, alkylbenzenesulfonic acid salts, alkylphosphoric acid salts and the like.

Alternatively, examples of the nonionic emulsifiers for use include polyoxyethylene derivatives such as polyoxyalkylene alkylethers, polyoxyalkylene alkylallylethers, polyoxyalkylene sorbitan ethers and polyoxyethylene castor oil ethers; sorbitan fatty acid esters such as sorbitan monostearate, sorbitan monolaurylate and sorbitan monopalmitate; glycerol fatty acid esters such as glycerol monostearate and glycerol monooleate; aliphatic alkanolamines, polyoxyethylene distyrylphenylether, polyoxyethylene tristyrylphenylether, polyoxyethylene naphthylether, polyoxyethylene hydroxynaphthylether and the like.

Because the dithiocarbamic ester may be decomposed in the presence of an acid or alkali, it is desired to keep the pH of the polymerization system to 4.0 to 11.0 by addition of a pH adjuster, in the method of producing polychloroprene in the present embodiment. Examples of the pH adjusters for use then include acids such as hydrochloric acid, sulfuric acid, phosphoric acid, formic acid, acetic acid, oxalic acid, malic acid, citric acid, and amino acids and bases such as sodium hydroxide, potassium hydroxide, ammonia, diethylamine, triethylamine, diethanolamine and triethanolamine. Alternatively, ampholytes such as amino acids can also be used.

Among the pH adjusters above, weak acids and bases are preferable from the points of safety in handling and easiness of pH adjustment. The weak acids, as used herein, are those having a pKa of 2 or more (e.g., phosphoric acid, formic acid, acetic acid, malic acid, citric acid, etc.) and the weak bases are those having a pKb of 2 or more (e.g., ammonia, diethylamine, triethylamine, diethanolamine, triethanolamine, etc.).

The dissociation constant Ka of an acid is the equilibrium constant of the acid in the aqueous solution at dissociation equilibrium, and stronger acids have larger values. pKa is the negative common logarithm of Ka and stronger acids have smaller values. Similarly, pKb is the negative common logarithm of Kb, the dissociation constant of a base in the aqueous solution at dissociation equilibrium, and stronger bases have smaller pKb values. Two or more pH adjusters may be used in combination.

In the method of producing polychloroprene in the present embodiment, the polymerization temperature is not particularly limited, and may be in the range of 0 to 80°C, preferably in the range of 10 to 50°C.

The polymerization end point is also not particularly limited, and the polymerization is preferably continued until the monomer conversion rate reaches 60 to 100%, for improving productivity and for obtaining favorable adhesiveness. The polymerization terminator used then is not particularly limited as long as it's a commonly-used terminator, and for example, phenothiazine, 2,6-t-butyl-4-methylphenol, hydroxylamine and the like can be used.

For further improvement of the stability of polymerization solution, one or more of the emulsifiers and dispersants described above may be added to the polymerization solution during or after polymerization.

In the present embodiment, because the radical polymerization is carried out in the presence of a dithiocarbamic ester compound having a particular structure, regulation of polymerization is easier and thus, a polychloroprene having narrow molecular weight distribution is obtained.

The polychloroprene in the present embodiment may be used alone as an adhesive, but addition of a tackifying resin or a crosslinking agent thereto improves the adhesiveness. An adhesive containing the polychloroprene in the present embodiment has heat resistance improved from that of conventional adhesives, because a polymer having narrower molecular weight distribution is used. It is because the amount of its low-molecular weight polymer, which is lower in heat resistance, is reduced.

### Examples

Hereinafter, advantageous effects of the present invention will be described in detail with reference to Examples and Comparative Examples of the present invention. However, the present invention is not restricted by these Examples. In these Examples, polychloroprenes in Examples and Comparative Examples were prepared by the methods below and the molecular weight distribution thereof was evaluated.

### <Emulsion Polymerization of Chloroprene>

Water: 200 parts by mass, polyoxyethylene polycyclic phenylether: 20 parts by mass, naphthalenesulfonic acid formalin condensate sodium salt: 0.5 part by mass and sodium phosphate: 1.5 parts by mass were placed and solubilized in a 300 mL glass container; chloroprene monomer: 100 mass and a regulator were added thereto; and, after the mixture was heated to 40°C, potassium persulfate was added thereto to initiate polymerization. When the monomer conversion rate reached 60%, the reaction was terminated by addition of hydroxylamine and the residual monomer was removed by distillation, to give a latex. Subsequently, rubbers of Examples 1 to 3 and Comparative Examples 1 to 4 obtained by freeze drying of such latexes were analyzed by GPC (gel-permeation chromatography).

### <Emulsion Polymerization of Chloroprene in the Presence of Isoprene>

Water: 200 parts by mass, polyoxyethylene polycyclic phenylether: 20 parts by mass, naphthalenesulfonic acid formalin condensate sodium salt: 0.5 part by mass, and sodium phosphate: 1.5 parts by mass were placed and solubilized in a 300 mL glass container; chloroprene monomer: 100 mass and isoprene: 20 parts by mass and a regulator were added thereto; and, after the mixture was heated to 40°C, potassium persulfate was added thereto to initiate polymerization. When the monomer conversion rate reached 60%, the reaction was terminated by addition of hydroxylamine and the residual monomer was removed by distillation, to give a latex. Subsequently, rubbers of Examples 4 to 6 and Comparative Examples 5 and 6 obtained by freeze drying of such latexes were analyzed by GPC.

### <pH>

The pH was determined by using a pH meter (manufactured by Horiba, Ltd.).

### <Mw/Mn>

The number-average molecular weight Mn, the weight-average molecular weight Mw, and the molecular weight distribution (Mw/Mn) of a polymer was determined by GPC (standard: polystyrene). The measurement was made then in the following manner: apparatus: HLC-8120GPC (manufactured by Toso Corp.), precolumn: TSK Guard Column HHR-H, analytical column: HSK gel GMHHR-H, sample pump pressure: 8.0 to 9.5 M Pa, and sample preparation concentration: 0.1 mass %.

The results above are summarized in the following Tables 1 and 2. The regulators shown in Tables 1 and 2 are: a: benzyl pyrrolecarbodithioate represented by the following Chemical Formula (7), b: 1-phenylethyl imidazolecarbodithioate represented by the following Chemical Formula (8), c: 3-chloro-2-butenyl pyrrolecarbodithioate represented by the following Chemical Formula (9), d: benzyl dithiobenzoate represented by the following Chemical Formula (10), e: dodecylmercaptan represented by the following Chemical Formula (11).

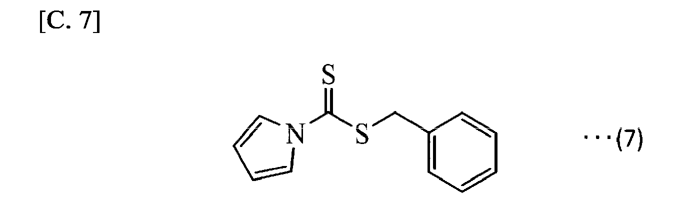

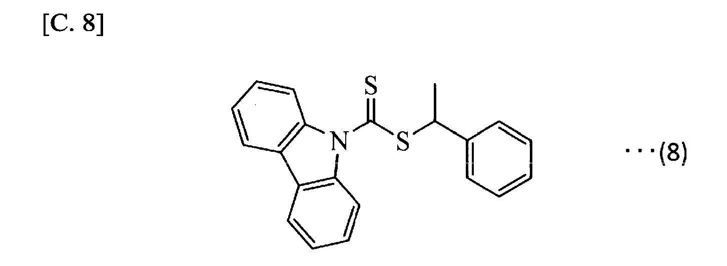

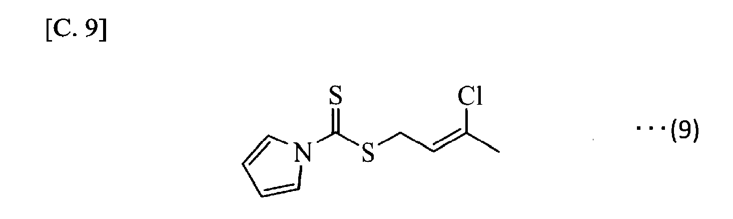

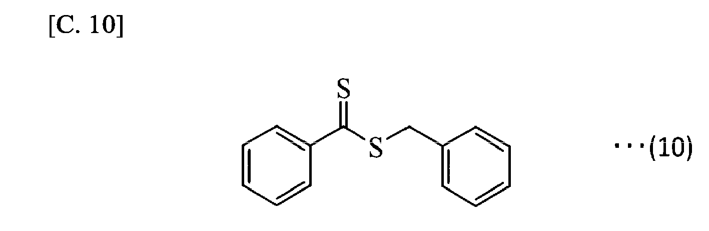

[C. 11] n-C₁₂H₂₅SH (11)

**[Table 1]**

| | | Example | | | Comparative Example | | | |
|---|---|---|---|---|---|---|---|---|
| | | 1 | 2 | 3 | 1 | 2 | 3 | 4 |
| Regulator | Kind | a | a | b | c | c | d | e |
| | Blending amount (parts by mass) | 0.473 | 0.147 | 0.219 | 0.470 | 0.146 | 0.154 | 0.128 |
| Polymerization rate | % | 60 | 59 | 60 | 59 | 61 | 62 | 60 |
| Number-average molecular weight | × 10³ | 39 | 108 | 100 | 62 | 1167 | Gelling | 2310 |
| Molecular weight distribution | | 1.4 | 1.5 | 1.4 | 1.7 | 2.4 | Unmeasurable | 3.0 |

**[Table 2]**

| | | Example | | | Comparative Example | |
|---|---|---|---|---|---|---|
| | | 4 | 5 | 6 | 5 | 6 |
| Regulator | Kind | a | a | b | c | c |
| | Blending amount (parts by mass) | 0,473 | 0.147 | 0.219 | 0.470 | 0.146 |
| Polymerization rate | % | 61 | 60 | 58 | 62 | 59 |
| Number-average molecular weight | × 10³ | 45 | 127 | 1020 | 62 | 1670 |
| Molecular weight distribution | | 1.5 | 1.6 | 1.5 | 2.3 | 2.7 |

The results in Tables 1 and 2 confirm that the polychloroprenes of Examples 1 to 6 prepared within the technical scope of the present invention have molecular weight distribution narrower than that of the polychloroprene elastomers of Comparative Examples 1 to 6 prepared by using a regulator outside the scope of the present invention.

## Claims

1. A polychloroprene, **characterized by** being prepared by radical polymerization of chloroprene alone, or a mixture of chloroprene and a monomer copolymerizable with chloroprene in the presence of a dithiocarbamic ester compound represented by the following Chemical Formula (A): 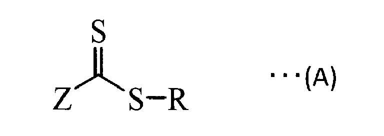 wherein Z is a substituted or unsubstituted heterocyclic group having at least one nitrogen atom that is bound to the -CS₂-R group or a group represented by the following Chemical Formula (B), and R is a group represented by the following Chemical Formula (C); 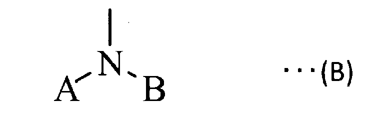 wherein A and B each independently represent a group selected from the group consisting of hydrogen, substituted or unsubstituted alkyl groups, substituted or unsubstituted alkenyl groups, substituted or unsubstituted alkoxy groups, substituted or unsubstituted acyl groups, substituted or unsubstituted aroyl groups, substituted or unsubstituted aryl groups, substituted or unsubstituted heteroaryl groups, substituted or unsubstituted alkylsulfonyl groups, substituted or unsubstituted alkylsulfinyl groups, substituted or unsubstituted alkylphosphonyl groups, substituted or unsubstituted arylsulfinyl groups and substituted or unsubstituted arylphosphonyl groups; 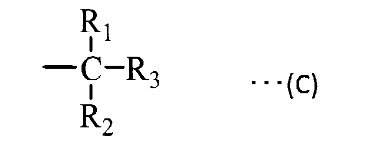 wherein R₁ represents hydrogen or an alkyl group; R₂ represents hydrogen or an alkyl, phenyl, substituted phenyl cyano or ester group; and R₃ represents a phenyl, substituted phenyl, cyano or ester group.

2. The polychloroprene according to Claim 1, wherein the monomer copolymerizable with chloroprene is at least one compound selected from the group consisting of 2,3-dichloro-1,3-butadiene, 1,3-butadiene, styrene, (meth)acrylic acid, (meth)acrylic esters and isoprene.

3. The polychloroprene according to Claim 1 or 2, wherein the radical polymerization is suspension or emulsion polymerization.

4. The polychloroprene according to Claim 3, which is prepared by emulsion polymerization using an anionic or nonionic emulsifier.

5. A method of producing a polychloroprene, comprising radically polymerizing chloroprene alone or a mixture of chloroprene and a monomer copolymerizable with chloroprene in the presence of a dithiocarbamic ester compound represented by the following Chemical Formula (A). 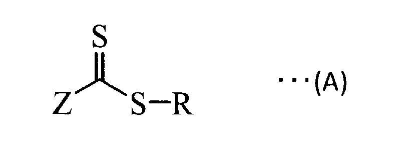 wherein Z is a substituted or unsubstituted heterocyclic group having at least one nitrogen atom that is bound to the -CS₂-R group or a group represented by the following Chemical Formula (B), and R is a group represented by the following Chemical Formula (C); 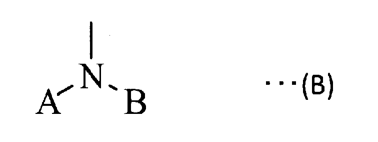 wherein A and B each independently represent a group selected from the group consisting of hydrogen, substituted or unsubstituted alkyl groups, substituted or unsubstituted alkenyl groups, substituted or unsubstituted alkoxy groups, substituted or unsubstituted acyl groups, substituted or unsubstituted aroyl groups, substituted or unsubstituted aryl groups, substituted or unsubstituted heteroaryl groups, substituted or unsubstituted alkylsulfonyl groups, substituted or unsubstituted alkylsulfinyl groups, substituted or unsubstituted alkylphosphonyl groups, substituted or unsubstituted arylsulfinyl groups and substituted or unsubstituted arylphosphonyl groups; 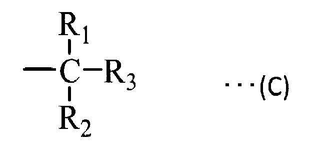 wherein R₁ represents hydrogen or an alkyl group; R₂ represents hydrogen or
an alkyl, phenyl, substituted phenyl cyano or ester group; and R₃ represents a phenyl, substituted phenyl, cyano or ester group.

6. The method of producing a polychloroprene according to Claim 5, wherein chloroprene is polymerized with at least one monomer selected from the group consisting of 2,3-dichloro-1,3-butadiene, 1,3-butadiene, styrene, (meth)acrylic acid, (meth)acrylic esters and isoprene.

7. The method of producing a polychloroprene according to Claim 5 or 6, wherein the polymerization is suspension or emulsion polymerization.

8. The method of producing a polychloroprene according to Claim 7, wherein the emulsion polymerization is carried out by using an anionic or nonionic emulsifier.

9. The method of producing a polychloroprene according to any one of Claims 5 to 8, wherein the pH during polymerization is adjusted to 4.0 to 11.0 by addition of a pH adjuster.

10. An adhesive containing the polychloroprene according to any one of Claims 1 to 4.
